(19) Europäisches Patentamt
European Patent Office
Office européen des brevets

(11) EP 3 231 844 B1

(12) EUROPEAN PATENT SPECIFICATION

(45) Date of publication and mention of the grant of the patent:
**27.11.2019 Bulletin 2019/48**

(21) Application number: **15867286.5**

(22) Date of filing: **10.12.2015**

(51) Int Cl.:
***C08L 81/02*** *(2006.01)* ***C08J 5/00*** *(2006.01)*
***C08K 5/10*** *(2006.01)* ***C08K 5/541*** *(2006.01)*
***C08L 83/04*** *(2006.01)* ***C09J 11/06*** *(2006.01)*
***C09J 181/04*** *(2006.01)* ***C09J 183/04*** *(2006.01)*

(86) International application number:
**PCT/JP2015/084645**

(87) International publication number:
**WO 2016/093309 (16.06.2016 Gazette 2016/24)**

(54) **POLYARYLENE SULFIDE RESIN COMPOSITION, MOLDED ARTICLE, COMPOSITE MOLDED ARTICLE, AND METHOD FOR PRODUCING COMPOSITE MOLDED ARTICLE**

POLYARYLENSULFIDHARZZUSAMMENSETZUNG, FORMKÖRPER, VERBUNDFORMARTIKEL UND VERFAHREN ZUR HERSTELLUNG EINES VERBUNDFORMKÖRPERS

COMPOSITION DE RÉSINE DE POLY(SULFURE D'ARYLÈNE), ARTICLE MOULÉ, ARTICLE MOULÉ COMPOSITE ET PROCÉDÉ POUR LA PRODUCTION D'ARTICLE MOULÉ COMPOSITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2014 JP 2014251923**

(43) Date of publication of application:
**18.10.2017 Bulletin 2017/42**

(73) Proprietor: **DIC Corporation**
**Tokyo 174-8520 (JP)**

(72) Inventors:
- **YAMADA, Keisuke**
**Ichihara-shi**
**Chiba 290-8585 (JP)**
- **BRANCOUR, Celia**
**Ichihara-shi**
**Chiba 290-8585 (JP)**
- **MATSUO, Shingo**
**Ichihara-shi**
**Chiba 290-8585 (JP)**

(74) Representative: **Beckmann, Claus**
**Kraus & Weisert**
**Patentanwälte PartGmbB**
**Thomas-Wimmer-Ring 15**
**80539 München (DE)**

(56) References cited:
**EP-A2- 0 292 275** **JP-A- H 073 074**
**JP-A- H09 235 468** **JP-A- H09 235 468**
**JP-A- S62 197 451** **JP-A- S62 197 451**
**JP-A- 2000 103 967** **JP-A- 2003 534 438**
**JP-A- 2008 069 274** **JP-A- 2013 082 792**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Technical Field

The present invention relates to a polyarylene sulfide resin molded article that contains a polyarylene sulfide resin and has, in particular, various excellent characteristics, e.g., rigidity, heat resistance, dimensional stability, chemical resistance, and temperature cycle resistance, of the polyarylene sulfide resin, excellent mold releasability, and in addition, excellent mechanical strength of the cured material and adhesiveness to a silicone resin and relates to a polyarylene sulfide resin composition for providing the molded article.

Background Art

The polyarylene sulfide (hereafter may be abbreviated as PAS) resin represented by a polyphenylene sulfide (hereafter may be abbreviated as PPS) resin has excellent mechanical strength, heat resistance, chemical resistance, moldability, and dimensional stability and is used as, for example, a material for forming electric·electronic parts and automobile parts by utilizing the above-described characteristics.

However, the polyarylene sulfide resin has insufficient adhesiveness to a silicone resin compared with other resin engineering plastics. In this regard, in order to improve this defect of the PPS resin, mixing or alloying with a different type of resin has been investigated.

In particular, mixing of a polyarylene sulfide resin having high heat resistance with a polytetrafluoroethylene resin (hereafter abbreviated as PTFE) has been investigated. For example, PTL 1 discloses a polyarylene sulfide resin composition in which a polyarylene sulfide resin is mixed with PTFE and a reinforcing material. It is mentioned that the polyarylene sulfide resin composition and a molded article thereof have excellent mechanical characteristics, electric insulation properties, and fluidity and further have excellent adhesiveness to an epoxy resin. However, if the molded article is sealed with a silicone resin, crystallization of the silicone resin excessively proceeds, the silicone resin whitens at the interface to the molded article and, as a result, the adhesion strength relative to the silicone resin is degraded. Therefore, it cannot be said that the adhesiveness to the silicone resin is always sufficient.

Also, a polyarylene sulfide resin composition, in which a small amount of PTFE and a reinforcing material are added, and a molded article thereof are known (PTL 2). Regarding the polyarylene sulfide resin composition and the molded article thereof, the adhesiveness to silicone can be improved, however, the releasability is insufficient in the case of molding. For example, when a mold is opened after injection molding, a molded article frequently adheres to the mold (fix side) so as to cause breakage of a Z-shaped portion, which is provided to the molded article, due to a sprue lock pin (Z pin).

JP 2013 082792 A relates to the problem to provide a polyarylene sulfide-based resin composition that excels in electrical property of tracking resistance or the like, especially excels in toughness, and further excels in mechanical strength, melt flowability, mold releasability, and molding appearance, thereby being useful for an electric part application of an electric or electronic part or an automobile electrical component or the like. As a solution to the problem, the document describes a polyarylene sulfide-based resin composition which includes, based on 100 parts by weight of polyarylene sulfide (A): 1-50 parts by weight of an ethylene-vinyl alcohol based copolymer (B); 1-25 parts by weight of a compatibilizer (C) of either one kind of a modified polysiloxane compound (C1) having at least one functional group selected from a group consisting of an amino group, an epoxy group, and a carboxyl group at both terminals and/or a polyisocyanate compound (C2) having at least two isocyanate groups in a molecular; 30-250 parts by weight of magnesium hydroxide (D); and 15-250 parts by weight of a fibrous filler (E).

EP 0 292 275 A2 describes a polyarylene sulfide resin composition which is improved in heat resistance and comprises (A) 100 parts by weight of a polyarylene sulfide resin, (B) 0.01 to 5 parts by weight of a fatty acid ester represented by the following formula (1), wherein at least one of $X^1$ through $X^4$ stands for a group -O-R and the remainder stands for -H, -OH, an alkyl group or an allyl group, and R stands for an alkyl or alkenyl group having 2 to 30 carbon atoms, and (C) 0 to 400 parts by weight of an inorganic filler.

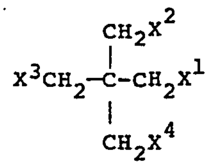

(1)

JP H09 235468 A relates to the problem to obtain a highly tough nonreinforced PPS material excellent in elongation, Izod impact strength, and hot water resistance by melt mixing and kneading a polyphenylene sulfide resin

with a specific alkoxysilane compd. As a solution to the problem, the document describes a polyphenylene sulfide resin composition which does not substantially contain a fibrous filler or a nonfibrous filler and which is obtained by melt mixing and kneading 99.7-97 wt.-% polyphenylene sulfide resin having a Soxhlet extractability with chloroform of 1.5 wt.-% or lower, a heat of crystallization by temperature fall with a differential scanning calorimeter of 40 J/g or lower, and a total ash content of 0.2 wt.-% or lower with 0.3-3 wt.-% alkoxysilane compound having a cyclohexylepoxy group [preferably d-(3,4-epoxycyclohexyl)ethyltrimethoxysilane] as a toughness improver and an amide compd. formed from a 12-40C aliphatic monocarboxylic acid, a 2-20 C polybasic acid, and a diamine.

JP S62 197451 A relates to the problem to provide a resin composition for use in sealing electronic component having excellent moisture resistance and moldability, consisting of a polyphenylene sulfide resin, a specified inorganic filler and a mixture of an organosilane and (modified) silicone oil.

As a solution to the problem, the document describes a composition comprising 100 parts by weight of polyphenylene sulfide resin (A) having a melt flow rate of 1,000 to 10,000g/10 min as measured by the method according to ASTM D 1238-74 (316 °C, load: 5kg) which is melt-kneaded with 25-400 parts by weight of an inorganic filler (B) having an aspect ratio of not higher than 9 (e.g., fused silica), 0.2-25 parts by weight of a mixture (C) of an organosilane (e.g., vinyltrimethoxysilane) and unmodified silicone oil (e.g., polydimethylsiloxane) and/or silicone oil modified with a functional group selected from the group consisting of hydroxyl, amino, carboxyl, epoxy, methacryloxy and mercapto groups and optionally other polymers and additives at 280 to 400 °C.

JP 2008 069274 A relates to the problem to provide a polyarylene sulfide composition, excellent in adhesiveness to epoxy resins, etc., and also excellent in toughness, impact resistance, weld strength, resistance to heat cycle and mechanical strength and particularly useful for component applications such as electric/electronic components or equipment components for automobiles. As a solution to the problem, the document describes a polyarylene sulfide composition which is composed of (A) 67-98.9 wt.-% polyarylene sulfide, (B) 1-30 wt.-% at least one kind of polyethylene-based copolymer selected from the group consisting of specific modified polyethylene-based copolymers and (C) 0.1-5 wt.-% modified polysiloxane compounds each having at least one kind of functional group selected from the group consisting of an amino group, an epoxy group and a carboxy group at both ends.

Citation List

Patent Literature

PTL 1: Japanese Unexamined Patent Application Publication No. 2009-30030

PTL 2: Japanese Unexamined Patent Application Publication No. 10-237301

Summary of Invention

Technical Problem

Accordingly, an issue to be solved by the present invention is to provide a polyarylene sulfide resin molded article that maintains characteristics, e.g., mechanical characteristics, intrinsic to the polyarylene sulfide resin molded article and has excellent adhesiveness to a silicone resin and releasability, a polyarylene sulfide resin composition for providing the molded article, a molded article produced by molding the polyarylene sulfide resin composition, and a method for producing a composite molded article including the steps of sealing or bonding the molded article with a silicone resin and, thereafter, curing the silicone resin.

Solution to Problem

In order to solve the above-described problems, the present inventors performed intensive research and, as a result, found that the above-described problems were solved by using a polyarylene sulfide resin containing a polyarylene sulfide resin (A), a dimethylpolysiloxane (B), a fatty acid ester (C), and a silane coupling agent (D) as indispensable components so as to complete the present invention.

That is, the present invention relates to a polyarylene sulfide resin composition containing a polyarylene sulfide resin (A), a dimethylpolysiloxane (B), a fatty acid ester (C), and a silane coupling agent (D) as indispensable components.

The present invention further relates to a molded article produced by molding the polyarylene sulfide resin composition.

The present invention further relates to a composite molded article produced by bonding the molded article to

a cured material composed of a silicone resin.

The present invention further relates to a method for producing a composite molded article including the steps of sealing or bonding the molded article with a silicone resin and curing the silicone resin.

Advantageous Effects of Invention

According to the present invention, a polyarylene sulfide resin molded article that maintains characteristics, e.g., mechanical characteristics, intrinsic to the polyarylene sulfide resin molded article and has excellent adhesiveness to a silicone resin and releasability, a polyarylene sulfide resin composition for providing the molded article and, in addition, a composite molded article produced by bonding the the molded article to a silicone resin can be provided.

Description of Embodiments

A polyarylene sulfide resin composition according to the present invention contains a polyarylene sulfide resin (A), a dimethylpolysiloxane (B), a fatty acid ester (C), and a silane coupling agent (D) as indispensable components. Detailed description will be provided below.

Polyarylene sulfide resin (A)

The polyarylene sulfide resin composition according to the present invention contains the polyarylene sulfide resin (A) as an indispensable component. The polyarylene sulfide resin used in the present invention has a resin structure, in which a structure formed by coupling an aromatic ring and a sulfur atom serves as a repeating unit, and is specifically a resin in which a structural part denoted by formula (1) below

[Chem. 1]

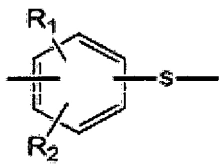

formula (1)

(in the formula, each of $R^1$ and $R^2$ represents a hydrogen atom, an alkyl group having a carbon atom number of 1 to 4, a nitro group, an amino group, a phenyl group, a methoxy group, or an ethoxy group) serves as a repeating unit.

Here, regarding the structural part denoted by formula (1), in particular, each of $R^1$ and $R^2$ in the formula is preferably a hydrogen atom from the viewpoint of the mechanical strength of the polyarylene sulfide resin. In that case, bonding at a para-position, as shown in formula (2) below, is preferable.

[Chem. 2]

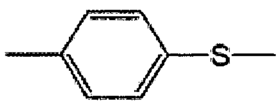

formula (2)

In particular, the coupling of the sulfur atom to the aromatic ring in the repeating unit is preferably a structure formed by coupling at a para-position, as shown in structural formula (2) above, from the viewpoint of the heat resistance and crystallinity of the polyarylene sulfide resin.

In addition to the structural part denoted by formula (1) above, the polyarylene sulfide resin may also include structural parts denoted by formulae (3) to (6)

[Chem. 3]

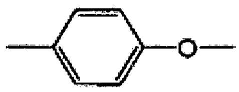

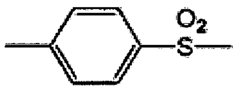

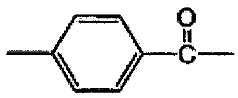

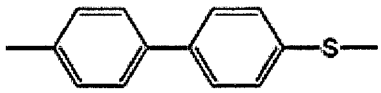

formulae (3)

to (6) in this order in a proportion of 30 percent by mole or less relative to the total of the structural parts denoted by formula (1) and formulae (3) to (6). In the present invention, in particular, the amount of the structural parts denoted by formulae (3) to (6) above is preferably 10 percent by mole or less from the viewpoint of the heat resistance and mechanical strength of the polyarylene sulfide resin. In the case where the structural parts denoted by formulae (3) to (6) above are included in the polyarylene sulfide resin, the bonding forms thereof may be any of a random copolymer and block copolymer.

Also, the polyarylene sulfide resin may include, in the molecular structure thereof, a trifunctional structural part denoted by formula (7) below,

[Chem. 4]

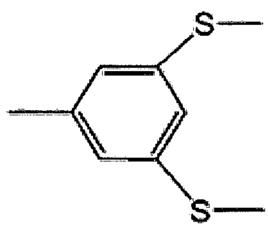

formula (7)

a naphthyl sulfide bond, or the like, and the proportion is preferably 3 percent by mole or less and particularly 1 percent by mole or less relative to the total number of moles of the other structural parts and this.

Meanwhile, the physical properties of the polyarylene sulfide resin are not specifically limited as long as the effects of the present invention are not impaired and are as described below.

(Melt viscosity)

There is no particular limitation regarding the melt viscosity (V6) measured at 300°C of the polyarylene sulfide resin used in the present invention as long as the effects of the present invention are not impaired. The melt viscosity (V6) is preferably within the range of 2 to 1,000 [Pa·s], more preferably within the range of 2 to 500 [Pa·s] because the balance between the fluidity and the mechanical strength is improved, and particularly preferably within the range of 2 to 200 [Pa·s]. In this regard, in the present invention, the melt viscosity (V6) is specified as a value of the melt viscosity measured after the polyarylene sulfide resin is maintained at 300°C, load: $1.96 \times 10^6$ Pa, and L/D = 10 mm/1 mm for 6 minutes by using a Koka type flow tester ("CFT-500C" produced by SHIMADZU CORPORATION).

(Non-Newtonian index)

The non-Newtonian index of the polyarylene sulfide resin used in the present invention is not particularly limited as long as the effects of the present invention are not impaired and is preferably within the range of 0.90 to 2.00. In the

case where a linear polyarylene sulfide resin is used, the non-Newtonian index is preferably within the range of 0.90 to 1.50, and is more preferably within the range of 0.95 to 1.20. Such a polyarylene sulfide resin has excellent mechanical properties, fluidity, and abrasion resistance. In this regard, the non-Newtonian index (N-value) is a value calculated by using the following formula from the shear rate and the shear stress measured by using CAPILOGRAPH under the condition of 300°C and the ratio L/D of the orifice length (L) to the orifice diameter (D) = 40.
[Math. 1]

$$SR = K \cdot SS^{N} \qquad (II)$$

[where SR represents a shear rate ($sec^{-1}$), SS represents a shear stress ($dyne/cm^2$), and K represents a constant] As N-value approaches 1, the structure of PPS gets closer to a linear shape and as the N-value increases, the degree of branching increases in the structure.

(Production method)

There is no particular limitation regarding the method for producing the polyarylene sulfide resin (A). Examples thereof include (1) a method that involves polymerizing a dihalogenoaromatic compound, to which a polyhalogenoaromatic compound or another copolymerizable composition is added if necessary, in the presence of sulfur and sodium carbonate, (2) a method that involves polymerizing a dihalogenoaromatic compound, to which a polyhalogenoaromatic compound or another copolymerizable component is added if necessary, in a polar solvent in the presence of a sulfidizing agent and the like, and (3) a method that involves subjecting p-chlorothiophenol, to which another copolymerizable component is added if necessary, to self-condensation. Among these methods, the method of item (2) has general versatility and is preferable. In order to adjust the degree of polymerization during a reaction, an alkali metal salt of carboxylic acid or sulfonic acid may be added or an alkali hydroxide may be added. Regarding the method of item (2), polyarylene sulfide resins produced by a method for producing the polyarylene sulfide resin by introducing a hydrous sulfidizing agent into a heated mixture containing an organic polar solvent and a dihalogenoaromatic compound at a speed suitable for removing water from a reaction mixture, reacting the dihalogenoaromatic compound and the sulfidizing agent, to which a polyhalogenoaromatic compound is added if necessary, in the organic polar solvent, and controlling the amount of water in a reaction system to be within the range of 0.02 to 0.5 mol relative to 1 mol of the organic polar solvent (refer to Japanese Unexamined Patent Application Publication No. 07-228699) and a method that involves reacting a dihalogenoaromatic compound, to which a polyhalogenoaromatic compound or another copolymerizable component is added if necessary, with an alkali metal hydrosulfide and an organic acid alkali metal salt in the presence of a solid alkali metal sulfide and an aprotic polar organic solvent, while the amount of organic acid alkali metal salt is controlled to be within the range of 0.01 to 0.9 mol relative to 1 mol of sulfur source and the amount of water in a reaction system is controlled to be within the range of 0.02 mol or less relative to 1 mol of aprotic polar organic solvent (refer to WO2010/058713) are particularly preferable. Specific examples of dihalogenoaromatic compounds include p-dihalobenzene, m-dihalobenzene, o-dihalobenzene, 2,5-dihalotoluene, 1,4-dihalonaphthalene, 1-methoxy-2,5-dihalobenzene, 4,4'-dihalobiphenyl, 3,5-dihalobenzoic acid, 2,4-dihalobenzoic acid, 2,5-dihalonitrobenzene, 2,4-dihalonitrobenzene, 2,4-dihaloanisole, p,p'-dihalodiphenyl ether, 4,4'-dihalobenzophenone, 4,4'-dihalodiphenylsulfone, 4,4'-dihalodiphenylsulfoxide, 4,4'-dihalodiphenylsulfide, and compounds in which an aromatic ring of each of the above-described compounds is provided with an alkyl group having a carbon atom number of 1 to 18. Examples of polyhalogenoaromatic compounds include 1,2,3-trihalobenzene, 1,2,4-trihalobenzene, 1,3,5-trihalobenzene, 1,2,3,5-tetrahalobenzene, 1,2,4,5-tetrahalobenzene, and 1,4,6-trihalonaphthalene. Also, it is desirable that the halogen atoms included in the above-described compounds be a chlorine atom and a bromine atom.

There is no particular limitation regarding an aftertreatment method for the reaction mixture containing the polyarylene sulfide resin produced in the polymerization step. Examples thereof include (1) a method in which, after the polymerization reaction is finished, the solvent is removed by distillation under reduced or atmospheric pressure from the reaction mixture without being processed or after being mixed with an acid or a base, a solid resulting from solvent removal by distillation is washed at least one time with a solvent, e.g., water, the reaction solvent (or an organic solvent having the same level of solubility in a low-molecular-weight polymer as the solubility of the reaction solvent), acetone, methyl ethyl ketone, or an alcohol, and neutralization, water washing, filtration, and drying are performed, (2) a method in which, after the polymerization reaction is finished, the reaction mixture is mixed with a solvent (a solvent that is soluble into the polymerization solvent used and is a poor solvent relative to at least the polyarylene sulfide), e.g., water, acetone, methyl ethyl ketone, an alcohol, an ether, a halogenated hydrocarbon, an aromatic hydrocarbon, or an aliphatic hydrocarbon, serving as a precipitating agent so as to precipitate solid products, e.g., polyarylene sulfide and inorganic salts, and these are subjected to filtration, washing, and drying, (3) a method in which, after the polymerization reaction is

finished, the reaction mixture is mixed with the reaction solvent (or an organic solvent having the same level of solubility in a low-molecular-weight polymer as the solubility of the reaction solvent), agitation is performed, filtration is performed so as to remove low-molecular-weight polymers, washing is performed at least one time with a solvent, e.g., water, acetone, methyl ethyl ketone, or an alcohol, and subsequently, neutralization, water washing, filtration, and drying are performed, (4) a method in which, after the polymerization reaction is finished, water is added to the reaction mixture, and water washing, filtration, addition of an acid in the water washing so as to perform acid treatment as necessary, and drying are performed, and (5) a method in which, after the polymerization reaction is finished, the reaction mixture is filtrated, washing is performed at least one time with the reaction solvent as necessary, and water washing, filtration, and drying are performed.

In this regard, in the aftertreatment methods shown in items (1) to (5) as examples, drying of the polyarylene sulfide resin may be performed in vacuum, in air, or in an inert gas atmosphere such as nitrogen.

Dimethylpolysiloxane (B)

The polyarylene sulfide resin composition according to the present invention contains a dimethylpolysiloxane (B) as an indispensable component. The dimethylpolysiloxane used in the present invention is a polymer having a dimethylsiloxane bond ($-Si(CH_3)_2-O-$) in the main chain, and the silicon atom may have an organic group other than a methyl group. Examples of such organic groups include alkenyl groups having a carbon atom number of 2 to 8, e.g., a vinyl group, an allyl group, a 1-butenyl group, and 1-hexenyl group. A vinyl group and an allyl group are preferable, and a vinyl group is particularly preferable. Such an alkenyl group may bond to a Si atom at an end of a molecular chain or may bond to a Si atom in the middle of a molecular chain. Further, the above-described dimethylpolysiloxane (B) may be used after the molecular weight is increased by addition polymerization of the alkenyl group.

An alkenyl-containing polyorganosiloxane, in which the alkenyl group bonds to only a silicon atom at an end of the molecular chain, is preferable from the viewpoint of the curing reaction rate. The dimethylpolysiloxane is preferably a straight-chain dimethylpolysiloxane.

Meanwhile, the dimethylpolysiloxane (B) is preferably silicone rubber that has thermoplasticity and is in the form of solid rubber or a solid powder at ambient temperature (15°C to 35°C).

In the case where the (B) component is included, there are advantages that the releasability of a molded article is significantly improved and, as a result, high surface smoothness and excellent adhesiveness to a silicone resin can be provided in combination.

The dimethylpolysiloxane may be silicone rubber particles. In such a case, the average particle diameter is not specifically limited and can be appropriately selected in accordance with purpose. The volume average particle diameter is preferably 0.01 μm to 30 μm, and more preferably 0.1 μm to 15 μm. In the case where the volume average particle diameter is 0.01 μm or more, the surface smoothness may be improved because of enhancement of the dispersibility of the polyarylene sulfide resin (A), the fatty acid ester (C), and the silane coupling agent (D). The volume average particle diameter is preferably 30 μm or less because the impact resistance tends to be improved and is further preferably 15 μm or less. In this regard, the volume average particle diameter can be measured by, for example, a laser diffraction method.

There is no particular limitation regarding the true specific gravity of the dimethylpolysiloxane (B) component. The true specific gravity can be appropriately selected in accordance with purpose and is preferably 0.90 to 1.5 and more preferably 0.95 to 1.4.

There is no particular limitation regarding the number of siloxane bonds in the dimethylpolysiloxane (B) component. The number of siloxane bonds can be appropriately selected in accordance with purpose and is preferably 20 to 15,000, more preferably within the range of 500 to 12,000, particularly preferably within the range of 2,000 to 10,000, and most preferably within the range of 4,000 to 8,000. The dimethylpolysiloxane used in the present invention is preferably any one of a straight-chain dimethylpolysiloxane and a dimethylpolysiloxane having a structure in which straight-chain dimethylpolysiloxanes are cross-linked. In the case of the straight-chain dimethylpolysiloxane, the number of siloxane bonds is more preferably 20 or more because bleed out from the molded article surface tends not to occur easily and further preferably 2,000 or more because bleed out from the molded article surface does not occur easily and the mechanical strength, in particular, the TD direction tensile characteristics, e.g., TD bending strength and TD bending elongation, tend to be improved.

In this regard, the number of siloxane bonds in the dimethylpolysiloxane (B) component can be determined by, for example, determining the molecular weight (Mw) of the dimethylpolysiloxane on the basis of the GPC measurement described below and dividing the molecular weight by the molecular weight (74) of a dimethylsiloxane bond unit ($-Si(CH_3)_2-O-$).

GPC measurement

Measuring apparatus: "HLC-8320 GPC" produced by Tosoh Corporation

Column: Guard column "HXL-L" produced by Tosoh Corporation

+ "TSK-GEL G1000HXL" produced by Tosoh Corporation

+ "TSK-GEL G2000HXL" produced by Tosoh Corporation

+ "TSK-GEL G3000HXL" produced by Tosoh Corporation

+ "TSK-GEL G4000HXL" produced by Tosoh Corporation

Detector: RI (differential refraction diameter)

Data processing: "GPC-8020 Model II Version 4.10" produced by Tosoh Corporation

Column temperature: 40°C

Developing solvent: Tetrahydrofuran

Flow rate: 1.0 ml/min

Standard sample: Following monodisperse polystyrenes having known molecular weights were used in conformity with the measurement manual of "GPC-8020 Model II Version 4.10" above.

Monodisperse polystyrene:

"A-500" produced by Tosoh Corporation

"A-2500" produced by Tosoh Corporation

"F-1" produced by Tosoh Corporation

"F-4" produced by Tosoh Corporation

"F-20" produced by Tosoh Corporation

"F-128" produced by Tosoh Corporation

"F-380" produced by Tosoh Corporation

Measurement sample: Filtrate (50 μl) prepared by dissolving 1 mg (solvent-soluble part) of resin into 1 ml of tetrahydrofuran and performing filtration with a microfilter (pore size of 0.45 μm)

The dimethylpolysiloxane (B) component may be impregnated in silica (hereafter also referred to as "silica impregnation (B)") or may be a dimethylpolysiloxane (B), the periphery of which is coated with a silicone resin powder having a three-dimensionally cross-linked structure (hereafter also referred to as "silicone composite particles").

In this regard, in the case where the dimethylpolysiloxane (B) component is the silica impregnation (B) component, there is no particular limitation regarding the content of the dimethylpolysiloxane (B) component in the silica impregnation (B) as long as the effects of the present invention are not impaired. The content is preferably 50 percent by mass or more and 95 percent by mass or less, and more preferably 65 percent by mass or more and 75 percent by mass or less. It is preferable that the content of the silica impregnation (B) component be 65 percent by mass or more and 75 percent by mass or less because the impact resistance is enhanced and the smoothness tends to be improved.

Meanwhile, in the case where the dimethylpolysiloxane (B) is the silicone composite particles, the dimethylpolysiloxane (B) component coverage of the coating component (silicone resin powder having a three-dimensionally cross-linked structure) is preferably 50% or less. It is preferable that the coverage be 50 percent or less because the impact resistance is enhanced and the smoothness tends to be improved.

Regarding the dimethylpolysiloxane (B) component, a commercially available product may be used or an appropriately synthesized product may be used.

Specific examples of the dimethylpolysiloxane (B) component include, on a trade name basis, silicone rubber particles, e.g., KMP-597, KMP-598, KMP-594, and X-52-875 (these are produced by Shin-Etsu Chemical Co., Ltd.); silicone composite particles, e.g., KMP-605 and X-52-7030 (these are produced by Shin-Etsu Chemical Co., Ltd.); and silica impregnation (B) components, e.g., GENIOPLAST (registered trade mark) Pellet S (produced by Wacker Asahikasei Silicone Co., Ltd.).

There is no particular limitation regarding the content of the dimethylpolysiloxane (B) in the polyarylene sulfide resin composition according to the present invention as long as the effects of the present invention are not impaired. The content is preferably within the range of 0.01 to 20.0 parts by mass relative to 100 parts by mass of the polyarylene sulfide resin (A), and more preferably within the range of 0.05 to 10.0 parts by mass. It is preferable that the content be 0.01 parts by mass because the releasability is excellent and be 20.0 parts by mass or less because the mechanical characteristics, the heat resistance, and the adhesiveness to a silicone resin tend to become excellent.

Fatty acid ester (C)

The polyarylene sulfide resin composition according to the present invention contains a fatty acid ester (C) as an indispensable component. Examples of fatty acid esters used in the present invention include an ester of an aliphatic alcohol and an aliphatic carboxylic acid.

Such an aliphatic alcohol may be a monohydric alcohol or a polyhydric alcohol of divalent or higher. Also, the carbon atom number of the alcohol is preferably 3 to 32 and more preferably 5 to 30. Specific examples include myristyl alcohol, stearyl alcohol, oleyl alcohol, dihydric alcohols, e.g., ethylene glycol, diethylene glycol, triethylene glycol, propylene glycol, neopentyl glycol, and 1,6-hexane diol, and trihydric or higher alcohols, e.g., glycerin, diglycerin, triglycerin, trimethylol ethane, trimethylol propane, pentaerythritol, dipentaerythritol, mannitol, and sorbitol, but are not limited to these.

Meanwhile, the aliphatic carboxylic acid may be a saturated fatty acid and/or an unsaturated fatty acid, and may be an aliphatic carboxylic acid preferably having a carbon atom number of 3 to 32 and more preferably having a carbon atom number of 10 to 30. In particular, a saturated aliphatic carboxylic acid is preferable. Regarding the fatty acid ester according to the present invention, a full ester is preferable because of excellent thermal stability at high temperatures. Regarding the saturated fatty acid, butyric acid, caproic acid, caprylic acid, capric acid, lauric acid, myristic acid, palmitic acid, stearic acid, arachidic acid, behenic acid, lignoceric acid, cerotic acid, montanic acid, and melissic acid are used. Regarding the unsaturated fatty acid, obtusilic acid, linderic acid, tsuzuic acid, physeteric acid, myristoleic acid, zoomaric acid, petroselinic acid, oleic acid, vaccenic acid, gadoleic acid, cetoleic acid, erucic acid, selacholeic acid, linoleic acid, hiragoic acid, eleostearic acid, punicic acid, tricosanic acid, linolenic acid, moroctic acid, parinaric acid, arachidonic acid, clupanodonic acid, scoliodonic acid, and herring acid are used.

There is no particular limitation regarding the content of the fatty acid ester (C) in the polyarylene sulfide resin composition according to the present invention as long as the effects of the present invention are not impaired. The content is preferably within the range of 0.005 to 5.0 parts by mass relative to 100 parts by mass of the polyarylene sulfide resin (A), more preferably within the range of 0.01 to 1.0 parts by mass, and further preferably within the range of 0.05 to 0.5 parts by mass. It is preferable that the content be within such a range because the polyarylene sulfide resin composition has good releasability and, in addition, the molded article has excellent adhesiveness to a silicone resin.

Silane coupling agent (D)

The polyarylene sulfide resin composition according to the present invention contains a silane coupling agent (D) as an indispensable component. There is no particular limitation regarding the silane coupling agent (D) used in the present invention as long as the effects of the present invention are not impaired. A silane coupling agent having a functional group, for example, an epoxy group, an isocyanato group, an amino group, or a hydroxyl group that reacts with a carboxy group is preferable. Examples of such silane coupling agents include epoxy-containing alkoxysilane compounds, e.g., γ-glycidoxypropyltrimethoxysilane, γ-glycidoxypropyltriethoxysilane, and β-(3,4-epoxycyclohexyl)ethyltrimethoxysilane, isocyanato-containing alkoxysilane compounds, e.g., γ-isocyanatopropyltrimethoxysilane, γ-isocyanatopropyltriethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane, and γ-isocyanatopropyltrichlorosilane, amino-containing alkoxysilane compounds, e.g., γ-(2-aminoethyl)aminopropylmethyldimethoxysilane, γ-(2-aminoethyl)aminopropyltrimethoxysilane, and γ-aminopropyltrimethoxysilane, and hydroxy-containing alkoxysilane compounds, e.g., γ-hydroxypropyltrimethoxysilane and γ-hydroxypropyltriethoxysilane.

There is no particular limitation regarding the content of the silane coupling agent (D) in the polyarylene sulfide resin composition according to the present invention as long as the effects of the present invention are not impaired. The content is preferably within the range of 0.01 to 2.0 parts by mass relative to 100 parts by mass of the polyarylene sulfide resin (A), and more preferably within the range of 0.1 to 1.0 parts by mass. It is preferable that the content be within such a range because the polyarylene sulfide resin composition has good releasability and, in addition, the molded article has excellent adhesiveness to a silicone resin.

The polyarylene sulfide resin composition according to the present invention preferably contains a filler in addition to the above-described components for the purpose of further improving performance, e.g., the mechanical characteristics, in particular, the thermal shock strength, the heat resistance, and the dimensional stability. The filler used in the present invention is not an indispensable component. In the case where the filler is added within the range of more than 0 parts by mass, usually 1 part by mass or more, more preferably 10 parts by mass or more and 600 parts by mass or less relative to 100 parts by mass of the polyarylene sulfide resin, various types of performance, e.g., the strength, the rigidity, the heat resistance, the heat dissipation effect, and the dimensional stability, can be improved in accordance with the purpose of addition of the filler.

Regarding the filler, known common materials can be used as long as the effects of the present invention are not impaired, and various shapes of, for example, fibrous or non-fibrous, e.g., particulate or tabular, fillers and the like may be used. Specifically, fibrous fillers such as glass fiber, carbon fiber, silane glass fiber, ceramic fiber, aramid fiber, metal fiber, fibers of potassium titanate, silicon carbide, calcium sulfate, calcium silicate, and the like, and natural fibers of wollastonite and the like, can be used. Also, non-fibrous fillers such as glass beads, glass flake, barium sulfate, calcium sulfate, clay, pyrophyllite, bentonite, sericite, zeolite, mica, talc, attapulgite, ferrite, calcium silicate, calcium carbonate, magnesium carbonate, and glass beads can be used.

The polyarylene sulfide resin composition according to the present invention further contains, in addition to the above-described components, synthetic resins, e.g., a polyester resin, a polyamide resin, a polyimide resin, a polyether imide resin, a polycarbonate resin, a polyphenylene ether resin, a polysulfone resin, a polyether sulfone resin, a polyether ether ketone resin, a polyether ketone resin, a polyarylene resin, a polyethylene resin, a polypropylene resin, a polytetrafluoroethylene resin, a polydifluoroethylene resin, a polystyrene resin, an ABS resin, a phenol resin, an urethane resin, and a liquid crystal polymer, or elastomers, e.g., a fluororubber, as arbitrary components appropriately in accordance with an application. These resins are not indispensable components. The amount of use when the resins are added differs on a purpose basis and, therefore, cannot be specified indiscriminately. The amount may be adjusted appropriately within the range of 0.01 to 1,000 parts by mass relative to 100 parts by mass of the polyarylene sulfide resin (A) in accordance with purpose and application as long as the effects of the present invention are not impaired.

Further, when molding is performed, the polyarylene sulfide resin composition according to the present invention contains, as necessary, various additives, e.g., a colorant, a heat-resistant stabilizer, an ultraviolet stabilizer, a foaming agent, a rust inhibitor, a flame retardant, and a lubricant, as arbitrary components within the bounds of not impairing the effects of the present invention. The amounts of use of these additives differ on a purpose basis and, therefore, cannot be specified indiscriminately. The amount may be adjusted appropriately within the range of 0.01 to 1,000 parts by mass relative to 100 parts by mass of the polyarylene sulfide resin (A) in accordance with purpose and application as long as the effects of the present invention are not impaired.

There is no particular limitation regarding the method for producing the polyarylene sulfide resin composition according to the present invention. The polyarylene sulfide resin (A), the dimethylpolysiloxane (B), the fatty acid ester (C), and the silane coupling agent (D), which are indispensable components, are melt-kneaded at a melting temperature of the polyarylene sulfide resin (A) or higher. More specifically, production can be performed by the steps of putting raw materials, that is, the polyarylene sulfide resin (A), the dimethylpolysiloxane (B), the fatty acid ester (C), and the silane coupling agent (D) which are indispensable components, and as necessary, other arbitrary components, e.g., the filler, in various forms of a powder, pellets, fragment, and the like into a ribbon blender, Henschel mixer, V-blender, or the like so as to perform dry blending and putting the resulting mixture into a known melt-kneader, e.g., Banbury mixer, a mixing roll, a single or twin screw extruder, or a kneader so as to perform melt-kneading in a temperature range in which the resin temperature becomes the melting point of the polyarylene sulfide or higher, preferably within the range of the melting temperature + 10°C or higher, more preferably within the temperature range of the melting temperature + 10°C to the melting temperature + 100°C, and further preferably within the temperature range of the melting temperature + 20°C to the melting temperature + 50°C. The addition of each component to the melt-kneader and mixing may be performed at a time or several.

The melt-kneader is preferably a twin screw extruder from the viewpoint of the dispersibility and the productivity. For example, it is preferable that melt-kneading be performed while the amount of ejection of the resin component within the range of 5 to 500 (kg/hr) and the number of revolutions of a screw within the range of 50 to 500 (rpm) are adjusted appropriately, and it is further preferable that the melt-kneading be performed under the condition in which the ratio of

these (the amount of ejection/the number of revolutions of the screw) is 0.02 to 5 (kg/hr/rpm). In the case where the filler and the additives, among the above-described components, are added, it is preferable that these be put into the twin screw extruder from a side feeder of the twin screw extruder from the viewpoint of the dispersibility. Regarding the location of such a side feeder, the ratio of the distance from a resin introduction portion of the twin screw extruder to the side feeder to a entire screw length of the extruder be 0.1 to 0.9. In particular, 0.3 to 0.7 is preferable.

The polyarylene sulfide resin composition according to the present invention that is produced by melt-kneading as described above is a melt-kneaded material containing the polyarylene sulfide resin (A), the dimethylpolysiloxane (B), the fatty acid ester (C), and the silane coupling agent (D), which are indispensable components, arbitrary components added as necessary, and components derived therefrom. It is preferable that the resulting melt-kneaded material be processed into the form of pellets, chips, granules, a powder, or the like by a known method, be subjected to predrying at a temperature of 100°C to 150°C as necessary, and be subjected to various types of molding.

The polyarylene sulfide resin composition according to the present invention can be subjected to various types of molding, e.g., injection molding, compression molding, extrusion molding into a composite, a sheet, a pipe, or the like, pultrusion molding, blow molding, and transfer molding, and is particularly suitable for an application related to injection molding because of excellent releasability. In the case where molding is performed by using injection molding, there is no particular limitation regarding various molding conditions, and the molding can be performed by a common method. For example, after the step of melting the polyarylene sulfide resin composition in an injection molding machine at a resin temperature within the temperature range of the melting temperature of the polyarylene sulfide resin or higher, preferably within the temperature range of the melting temperature + 10°C or higher, more preferably within the temperature range of the melting temperature + 10°C to the melting temperature + 100°C, and further preferably within the temperature range of the melting temperature + 20°C to the melting temperature + 50°C, molding may be performed by performing injection from the resin ejection outlet into the mold. At that time, the mold temperature may be set to be within a known temperature range, for example, within the range of room temperature (23°C) to 300°C, and preferably 120°C to 180°C.

The thus produced molded article of the polyarylene sulfide resin composition has excellent adhesiveness to a silicone resin and, as a result, is suitable for bonding to the silicone resin. For example, in the case where a tabular or box-type molded article composed of the polyarylene sulfide resin composition is sealed with or bonded to a silicone resin and the silicone resin is cured, a composite molded article, in which the molded article produced by molding the polyarylene sulfide resin composition is bonded to a cured material of the silicone resin, is produced.

The composite molded article can be variously applied and examples of main applications include electric·electronic parts represented by protection·support member·a plurality of individual semiconductors or modules for box-type electric·electronic part-integrated modules, sensors, LED lamps, connectors, sockets, resistors, relay cases, switches, coil bobbins, capacitors, variable capacitor cases, optical pickups, oscillators, various terminal boards, transformers, plugs, printed circuit boards, tuners, speakers, microphones, headphones, small motors, magnetic head bases, power modules, terminal blocks, semiconductors, liquid crystals, FDD carriages, FDD chassis, motor brush holders, parabolic antennas, and computer-related parts and the like; household and office electric appliance parts represented by VTR parts, television parts, irons, hair dryers, rice cooker parts, microwave oven parts, acoustic parts, audio·visual system parts, e.g., audio·laser disc·compact disc·DVD disc·blu-ray disc, lighting parts, refrigerator parts, air conditioner parts, typewriter parts, word processor parts, and water section equipment parts, e.g., sensors of the amount of hot water, temperature, and the like for hot-water supply apparatuses and baths; machine-related parts represented by office computer-related parts, telephone-related parts, facsimile-related parts, copier-related parts, cleaning jigs, motor parts, writers, typewriters, and the like; optical equipment and precision machinery-related parts represented by microscopes, binoculars, cameras, watches, and the like; automobile·vehicle-related parts, e.g., alternator terminals, alternator connectors, IC regulators, light dimmer potentiometer bases, relay blocks, inhibitor switches, various valves, e.g., an exhaust gas valve, various pipes of fuel system·exhaust system·intake system, air intake nozzle snorkels, intake manifolds, fuel pumps, engine cooling water joints, carburetor main bodies, carburetor spacers, exhaust gas sensors, cooling water sensors, oil temperature sensors, brake pad wear sensors, throttle position sensors, crank shaft position sensors, air flow meters, brake pad abrasion sensors, air conditioner thermostat bases, heating warm-air flow control valves, radiator motor brush holders, water pump impellers, turbine vanes, wiper motor-related parts, distributers, starter switches, ignition coils and bobbins thereof, motor insulators, motor rotors, motor cores, starter relays, transmission wire harnesses, window washer nozzles, air conditioner panel switch boards, fuel-related electromagnetic valve coils, fuse connectors, horn terminals, electrical component insulating plates, step motor rotors, lamp sockets, lamp reflectors, lamp housings, brake pistons, solenoid bobbins, engine oil filters, and igniter cases, and so on.

EXAMPLES

<Examples 1 to 8 and comparative examples 1 to 4>

Materials in accordance with the component compositions and the amounts of mixing shown in Tables 1 and 2 were homogeneously mixed in a tumbler. Thereafter, the resulting mixture of the materials was put into a twin screw extruder "TEM-35B" with a vent produced by TOSHIBA MACHINE CO., LTD., and melt-kneading was performed at an amount of ejection of resin component of 25 kg/hr, the number of revolutions of screw of 250 rpm, a ratio (amount of ejection/number of revolutions of screw) of the amount of ejection of resin component (kg/hr) to the number of revolutions of screw (rpm) = 0.1 (kg/hr·rpm), and a predetermined resin temperature of 330°C so as to produce pellets of polyarylene sulfide resin composition.

Various evaluation tests described below were performed by using the resulting pellets. The results of the tests and the evaluations are shown in Tables 1 and 2.

[Method for measuring tensile characteristics]

The resulting pellets were supplied to an injection molding machine (SG75-HIPRO·MIII), which was produced by Sumitomo-Netstal, set at a cylinder temperature of 320°C, and injection molding was performed by using a mold for producing an ISO Type A dumbbell specimen while a mold temperature was controlled to be 130°C so as to produce an ISO Type A dumbbell specimen. The tensile strength and the tensile elongation of the resulting dumbbell specimen were measured by measuring methods in conformity with ISO 527-1 and 2.

[Method for measuring tensile characteristics in TD direction]

The resulting pellets were supplied to an injection molding machine (SG75-HIPRO·MIII), which was produced by Sumitomo-Netstal, set at a cylinder temperature of 320°C, and injection molding was performed by using a mold for producing an ISO D2 plate while a mold temperature was controlled to be 130°C, and cutting into the ISO D2 plate was performed so as to produce a test specimen. The TD bending strength and the TD bending elongation of the resulting test specimen were measured by a measuring method in conformity with ISO 178.

[Adhesion strength of molded article of PAS resin composition with respect to silicone resin]

The resulting pellets were supplied to an injection molding machine (SG75-HIPRO·MIII), which was produced by Sumitomo-Netstal, set at a cylinder temperature of 320°C, and injection molding was performed by using a mold for producing an ASTM No. 1 dumbbell specimen while a mold temperature was controlled to be 130°C so as to produce an ASTM No. 1 dumbbell specimen. The resulting ASTM No. 1 dumbbell specimen was divided at the center into two equal parts. A spacer (thickness: 1.8 to 2.2 mm, opening portion: 5 mm $\times$ 10 mm) formed so as to have a contact area with a silicone resin described later of 50 $mm^2$ was interposed between the two equal parts produced by dividing the ASTM No. 1 dumbbell specimen, and fixing was performed by using a clip. Thereafter, a silicone resin ("SE-1714" produced by Dow Corning Corp.) was injected into the opening portion and was cured·adhered by performing heating for 3 hours in a hot-air drier set at 135°C. After cooling was performed at 23°C for 1 day, the spacer was removed. The tensile strength at break of the resulting test specimen was measured at a strain rate of 1 mm/min, a distance between supported points of 80 mm, and 23°C by using a tensile tester produced by Instron. The resulting value was divided by an adhesion area and was taken as an adhesion strength.

[Releasability of PAS resin composition when molding]

The number of molded articles that was taken by the mold when molding the ISO Type A dumbbell (that is, the number of molded article adhering to the mold when the mold was opened after injection molding, or the number of Z-shaped portions, each of which was provided to the molded article, broken due to sprue lock pins (Z pins)) relative to 100 shots was counted.

[Table 1]

| Material | | Example | | | | | | | |
|---|---|---|---|---|---|---|---|---|---|
| | | 1 | 2 | 3 | 4 | 5 | 6 | 7 | 8 |
| PPS | A1 | 100 | 100 | | 100 | 100 | 100 | 100 | 100 |
| | A2 | | | 100 | | | | | |
| Dimethylpolysiloxane | B1 | 2.0 | | | | | | | |
| | B2 | | 2.0 | 2.0 | 2.0 | 0.2 | 8.0 | 2.0 | 2.0 |
| Wax | C1 | 0.2 | 0.2 | 0.2 | 0.2 | 0.2 | 0.2 | 0.8 | 0.2 |
| | C2 | | | | | | | | |
| Silane coupling agent | D1 | 0.8 | 0.8 | 0.8 | | 0.8 | 0.8 | 0.8 | 0.8 |
| | D2 | | | | 0.8 | | | | |
| others | E1 | 67 | 67 | 67 | 67 | 67 | 67 | 67 | 0 |
| Evaluation item | | | | | | | | | |
| Tensile strength (MPa) | | 170 | 170 | 190 | 180 | 170 | 165 | 140 | 170 |
| Tensile elongation at break (%) | | 1.5 | 1.5 | 1.1 | 1.5 | 1.5 | 1.6 | 1.2 | 40.0 |
| TD bending strength (MPa) | | 98 | 100 | 110 | 102 | 90 | 75 | 68 | 60 |
| TD bending elongation (%) | | 2.0 | 2.0 | 1.4 | 2.0 | 1.6 | 2.1 | 1.4 | 4.0 |
| Adhesion test ($N/mm^2$) | | 3.0 | 3.0 | 2.7 | 2.6 | 2.7 | 2.8 | 2.8 | 3.2 |
| Releasability test (number) | | 0 | 0 | 0 | 0 | 21 | 0 | 0 | 0 |
| TD: Direction perpendicular to flow | | | | | | | | | |

[Table 2]

| Material | | Comparative example | | | |
|---|---|---|---|---|---|
| | | 1 | 2 | 3 | 4 |
| PPS | A1 | 100 | 100 | 100 | 100 |
| | A2 | | | | |
| Dimethylpolysiloxane | B1 | | | | |
| | B2 | | 2.0 | | |
| Wax | C1 | 0.2 | | | |
| | C2 | | 0.8 | | |
| Silane coupling agent | D1 | | 0.8 | | |
| | D2 | 0.8 | | | |
| Others | E1 | 67 | 67 | 67 | 67 |
| | F1 | | | 0.2 | 8.0 |
| Evaluation item | | | | | |
| Tensile strength (MPa) | | 170 | 180 | 165 | 150 |
| Tensile elongation at break (%) | | 1.3 | 1.5 | 1.2 | 1.0 |
| TD bending strength (MPa) | | 89 | 110 | 82 | 70 |
| TD bending elongation (%) | | 1.2 | 2.0 | 1.6 | 1.2 |

(continued)

| Evaluation item | | | | |
|---|---|---|---|---|
| Adhesion test ($N/mm^2$) | 2.3 | 1.5 | 2.3 | 1.2 |
| Releasability test (number) | 69 | 0 | 71 | 0 |

In this regard, the values of mixed resins and materials shown in Tables 1 and 2 are expressed in parts by mass, and the following were used.

PPS

A1 Polyarylene sulfide resin "DIC. PPS (V6 melt viscosity of 20 Pa·s, non-NT index of 1.1)" produced by DIC Corporation

A2 Polyarylene sulfide resin "DIC. PPS (V6 melt viscosity of 700 Pa·s, non-NT index of 1.7)" produced by DIC Corporation

B1 Dimethylpolysiloxane (spherical silicone rubber powder (fine powder of silicone rubber having a structure in which straight chain dimethylpolysiloxane is cross-linked), average particle diameter of 13 μm, particle diameter distribution of 2 to 30 μm) "KMP-598" produced by Shin-Etsu Chemical Co., Ltd.

B2 Dimethylpolysiloxane (dimethylpolysiloxane (molecular weight Mw = 530,000, the number of siloxane bonds (molecular weight Mw/74) = 7,162) is impregnated in fumed silica, dimethylpolysiloxane/fumed silica = 65/35 (mass ratio)) "GENIOPLAST PELLET S" produced by Wacker Asahikasei Silicone Co., Ltd.

C1 Montanic acid wax "Licolub WE 40" produced by Clariant Ltd.

C2 Polyethylene wax "Luwax AH6" produced by BASF

D1 3-Aminopropyltriethoxysilane

D2 γ-Glycidoxypropyltrimethoxysilane

E1 Glass fiber chopped strand (E glass, fiber diameter of 10 μm, fiber length of 3 mm, epoxy-based sizing agent)

F1 PTFE "Molding powder M-112" produced by Daikin Industries, Ltd.

## Claims

**1.** A polyarylene sulfide resin composition comprising a polyarylene sulfide resin (A), a dimethylpolysiloxane (B), a fatty acid ester (C), and a silane coupling agent (D) as indispensable components.

**2.** The polyarylene sulfide resin composition according to Claim 1, wherein the fatty acid ester (C) is an ester of an aliphatic alcohol having a carbon atom number of 3 to 32 and an aliphatic carboxylic acid having a carbon atom number of 3 to 32.

**3.** The polyarylene sulfide resin composition according to Claim 1 or Claim 2, wherein the polyarylene sulfide resin composition is a melt-kneaded material.

**4.** The polyarylene sulfide resin composition according to any one of Claims 1 to 3, wherein the polyarylene sulfide resin composition is used for bonding to a silicone resin.

**5.** A molded article produced by molding the polyarylene sulfide resin composition according to any one of Claims 1 to 4.

6. A composite molded article produced by bonding the molded article according to Claim 5 to a cured material composed of a silicone resin.

7. A method for producing a composite molded article comprising the steps of sealing or bonding the molded article according to Claim 5 with a silicone resin and curing the silicone resin.

**Patentansprüche**

1. Polyarylensulfidharzzusammensetzung, umfassend ein Polyarylensulfidharz (A), ein Dimethylpolysiloxan (B), einen Fettsäureester (C) und ein Silankupplungsmittel (D) als unverzichtbare Komponenten.

2. Polyarylensulfidharzzusammensetzung gemäß Anspruch 1, wobei der Fettsäureester (C) ein Ester eines aliphatischen Alkohols mit einer Kohlenstoffatomzahl von 3 bis 32 und einer aliphatischen Carbonsäure mit einer Kohlenstoffatomzahl von 3 bis 32 ist.

3. Polyarylensulfidharzzusammensetzung gemäß Anspruch 1 oder Anspruch 2, wobei die Polyarylensulfidharzzusammensetzung ein schmelzgeknetetes Material ist.

4. Polyarylensulfidharzzusammensetzung gemäß einem der Ansprüche 1 bis 3, wobei die Polyarylensulfidharzzusammensetzung verwendet wird für die Bindung an ein Silikonharz.

5. Formkörper, hergestellt durch Formen der Polyarylensulfidharzzusammensetzung gemäß einem der Ansprüche 1 bis 4.

6. Verbundformkörper, hergestellt durch Binden des Formkörpers gemäß Anspruch 5 an ein gehärtetes Material, zusammengesetzt aus einem Silikonharz.

7. Verfahren zur Herstellung eines Verbundformkörpers, umfassend die Schritte des Versiegelns oder Bindens des Formkörpers gemäß Anspruch 5 mit/an ein/em Silikonharz und Härten des Silikonharzes.

**Revendications**

1. Composition à base de résine de polysulfure d'arylène comprenant une résine de polysulfure d'arylène (A), un diméthylpolysiloxane (B), un ester d'acide gras (C), et un agent de couplage au silane (D) en tant que composants indispensables.

2. Composition à base de résine de polysulfure d'arylène selon la revendication 1, dans laquelle l'ester d'acide gras (C) est un ester d'un alcool aliphatique ayant un nombre d'atomes de carbone de 3 à 32 et d'un acide carboxylique aliphatique ayant un nombre d'atomes de carbone de 3 à 32.

3. Composition à base de résine de polysulfure d'arylène selon la revendication 1 ou la revendication 2, dans laquelle la composition de résine de polysulfure d'arylène est un matériau malaxé à l'état fondu.

4. Composition de résine de polysulfure d'arylène selon l'une quelconque des revendications 1 à 3, dans laquelle la composition de résine de polysulfure d'arylène est utilisée pour se lier à une résine de silicone.

5. Article moulé produit par moulage de la composition de résine de polysulfure d'arylène selon l'une quelconque des revendications 1 à 4.

6. Article moulé composite produit en liant l'article moulé selon la revendication 5 à un matériau durci composé d'une résine de silicone.

7. Procédé de production d'un article moulé composite comprenant les étapes consistant à sceller ou à lier l'article moulé selon la revendication 5 avec une résine de silicone et à durcir la résine de silicone.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013082792 A
- EP 0292275 A2
- JP H09235468 A
- JP S62197451 A
- JP 2008069274 A
- JP 2009030030 A
- JP 10237301 A
- JP 7228699 A
- WO 2010058713 A